# EUROPEAN PATENT SPECIFICATION

(11) **EP 3 726 148 B1**
(45) Date of publication and mention of the grant of the patent: **07.06.2023**
(21) Application number: 19382296.2
(22) Date of filing: 16.04.2019
(51) Int. Cl.: F24D 17/00, F24H 9/00, F24S 10/30, F24S 60/30, F28D 20/00

(54) **SOLAR THERMAL SYSTEM**
SOLARWÄRMESYSTEM
SYSTÈME THERMIQUE SOLAIRE

(43) Date of publication of application: 21.10.2020
(73) Proprietor: ORKLI, S. COOP., 20240 Ordizia (Gipuzkoa) (ES)
(72) Inventor: HERZOG HERZOG, Oscar, 20200 Beasain (ES); ARIZMENDI URRUZOLA, Miguel Maria, 20200 Beasain (ES)
(74) Representative: Igartua, Ismael

(56) References cited:
- EP-A1- 2 924 364
- EP-A2- 2 489 945
- WO-A1-2013/150525
- DE-A1- 4 239 286
- DE-A1-102007 059 099
- DE-U1-202010 004 758

## Description

### TECHNICAL FIELD

The present invention relates to a solar thermal system, in particular an integrated solar thermal system which generates domestic hot water instantaneously.

### PRIOR ART

Solar thermal systems suitable for heating domestic water using solar energy are known in the prior art. Said solar thermal systems comprise a collector which captures heat from the sun, a primary circuit through which a fluid which is heated by the collector circulates, and a secondary circuit through which domestic water circulates, the domestic water being heated through the primary circuit. These thermal systems comprise a storage tank which stores domestic water under pressure for subsequent use. As a result of said storage, when a user turns on a faucet or shower, hot water comes out immediately without having to wait for the water to heat up.

These tanks are generally made of stainless steel or enameled steel, and generally subjected to pressure. Therefore, the known solutions have a cylindrical tank that is strong enough to withstand the pressure of the water stored therein. Planar geometries which can lead to stresses concentrating at specific points, causing the tank itself to burst, are avoided. Said cylindrical tanks are arranged vertically.

EP 2950029 A1 discloses a tank for storing domestic water under pressure comprising, in addition to the inlet and outlet conduit, a plurality of hollow tubular segments arranged adjacent to one another and attached to one another forming the tank body. The geometry of the tank allows storing larger amounts of water in a simple manner.

EP 1180657 A2 discloses a heat storage suitable for housing a thermal fluid and including a fluid inlet conduit and a fluid outlet conduit. The fluid inlet conduit is connected to a stratification conduit configured for stratifying the fluid depending on its temperature. Taking into account that stratification through a vertical conduit causes turbulences at points close to the outlets, the stratification conduit is arranged in an inclined manner.

US 4,574,779 A discloses a solar thermal system comprising a primary circuit through which a fluid configured for being heated by a collector circulates, and a storage tank housing therein an exchanger of the primary circuit. The storage tank houses domestic water, includes an inlet conduit and an outlet conduit for the domestic water, said domestic water housed in the storage tank being heated through the exchanger of the primary circuit.

DE 202010004758 U1 discloses a solar thermal system according to the preamble of claim 1, comprising a primary circuit through which circulates a fluid configured to be heated by the collector, a secondary circuit and a tank in which water from the primary circuit heats domestic water from the secondary circuit. The tank comprises a heating area in which the primary circuit is partially housed, and a transmission area comprising a central channel in the form of a chimney and orifices that pass through this central channel allowing temperature stratification of the fluid housed in the tank.

### DISCLOSURE OF THE INVENTION

The object of the invention is to provide a solar thermal system, as defined in the claims.

The solar thermal system of the invention comprises a collector, a primary circuit through which a fluid which is heated by the collector circulates, a secondary domestic water circuit, and a tank in which the fluid of the primary circuit heats the domestic water of the secondary circuit.

The tank comprises a heating area in which the primary circuit is partially housed, and a transmission area comprising walls demarcating a central channel as a chimney, and openings going through said walls, allowing the temperature stratification of a fluid housed in the tank depending on the temperature, the technical fluid being heated by the primary circuit and in turn heating the domestic water of the secondary circuit, the transmission area being communicated with a domestic water heating area in which the secondary circuit is partially housed.

The walls are substantially planar, the central channel being demarcated by two walls each of which including a first part demarcating the technical fluid heating area of the tank in which the primary circuit is partially housed, and a second part continuous to said first part, the second parts being arranged facing one another, the tank being substantially planar and extending below the surface of the collector.

An optimized tank which allows rapidly transmitting heat from the primary circuit to the domestic water by convection is thereby obtained.

These and other advantages and features of the invention will become evident in view of the drawings and detailed description of the invention.

### DESCRIPTION OF THE DRAWINGS

Figure 1 shows a perspective view of an embodiment of a solar thermal system according to the invention.
Figure 2 shows an exploded view of the solar thermal system shown in Figure 1.
Figure 3 shows a plan view of the main tank of the solar thermal system shown in Figure 1.
Figure 4 shows a sectioned plan view of the main tank of the solar thermal system shown in Figure 1.
Figure 5 shows a sectioned side view of the main tank of the solar thermal system shown in Figure 1.

### DETAILED DISCLOSURE OF THE INVENTION

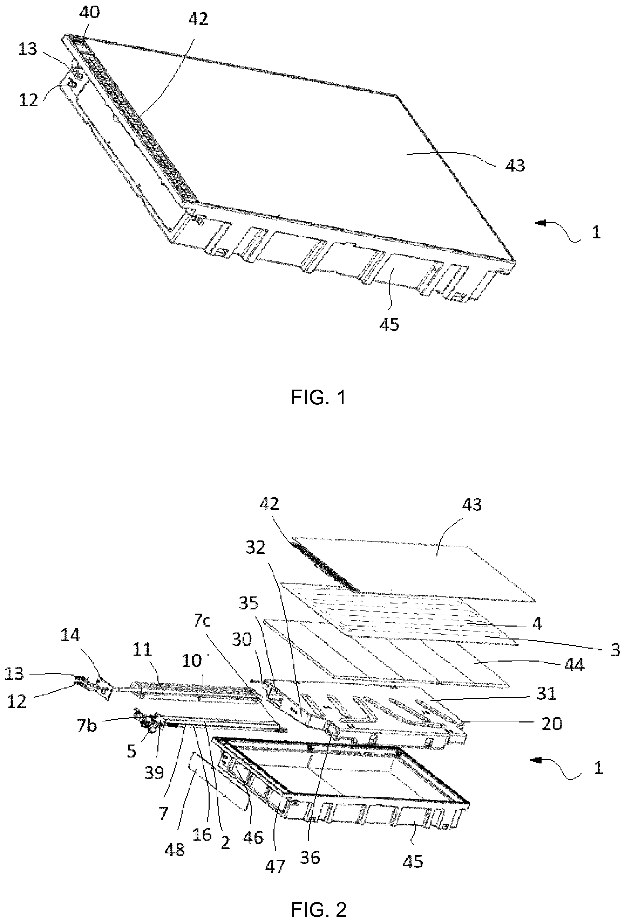

Figures 1 and 2 show an embodiment of the solar thermal system 1 according to the invention. The solar thermal system 1 comprises a collector 4, a primary circuit 2 through which a fluid which is heated by the collector 4 circulates, a secondary circuit 10 through which domestic water circulates, and a main tank 20 through which the fluid of the primary circuit 2 heats the domestic water of the secondary circuit 10.

The primary circuit 2 is a closed circuit comprising a first exchanger 3, shown with discontinuous lines in Figure 2, arranged below the collector 4 in which the fluid circulating through the primary circuit 2 is heated through the collector 4, a second exchanger 16 through which the heated circulating fluid exchanges heat with the secondary circuit 10, and impelling means 5 configured for maintaining the circulation of the fluid through the primary circuit 2. In a preferred embodiment, the impelling means 5 comprise a pump.

The secondary circuit 10 is an open circuit comprising a secondary exchanger 11 which in turn includes a domestic cold water inlet conduit 12 and a domestic hot water outlet conduit 13.

In the embodiment shown in the drawings, the secondary exchanger 11 is a coil exchanger.

The solar thermal system 1 of the invention further comprises a main tank 20 through which the fluid of the primary circuit 2 heats the domestic water of the secondary circuit 10, generating domestic hot water instantaneously. In the embodiment shown in the drawings, the main tank 20 comprises therein a technical fluid which is heated by the primary circuit 2, in particular by the second exchanger 16, and which in turn heats the domestic water. To that end, the second exchanger 16 of the primary circuit 2 and the secondary exchanger 11 of the secondary circuit 10 are arranged inside the main tank 20 submerged in the technical fluid. The technical fluid can be water or water mixed with antifreeze. The main tank 20 permanently contains technical fluid during the operation of the solar thermal system 1, where it is neither exchanged nor consumed.

Unlike other tanks of the prior art, the main tank 20 is not cylindrical but rather planar. The main tank 20 extends below the collector 4 such that it is arranged facing the largest possible surface of the collector 4. The main tank 20 comprises a substantially planar upper surface 31 which is arranged facing the collector 4, the first exchanger 3 of the primary circuit 2 being arranged outside the tank 20, between said upper surface 31 and the collector 4.

Accumulation of domestic hot water does not occur, so health concerns are eliminated. Furthermore, by circulating the domestic water through the secondary exchanger 11, the technical fluid stored in the main tank 20 is not pressurized, so it is possible to use non-metallic tanks of non-cylindrical geometry.

The main tank 20 comprises a side surface 32 including an opening 35 through which the secondary exchanger 11 is introduced in or extracted from the main tank 20. The secondary exchanger 11 is fixed to said side surface 32 through a support 14, where said secondary exchanger 11 can be extracted. The assembly and replacement of said secondary exchanger 11 without having to change the entire main tank 20 is thereby facilitated.

The solar thermal system 1 may comprise a non-depicted auxiliary resistor which is arranged inside the main tank 20, substantially parallel to the secondary exchanger 11. Said auxiliary resistor can be assembled such that it can be extracted from the main tank 20 through the support 14.

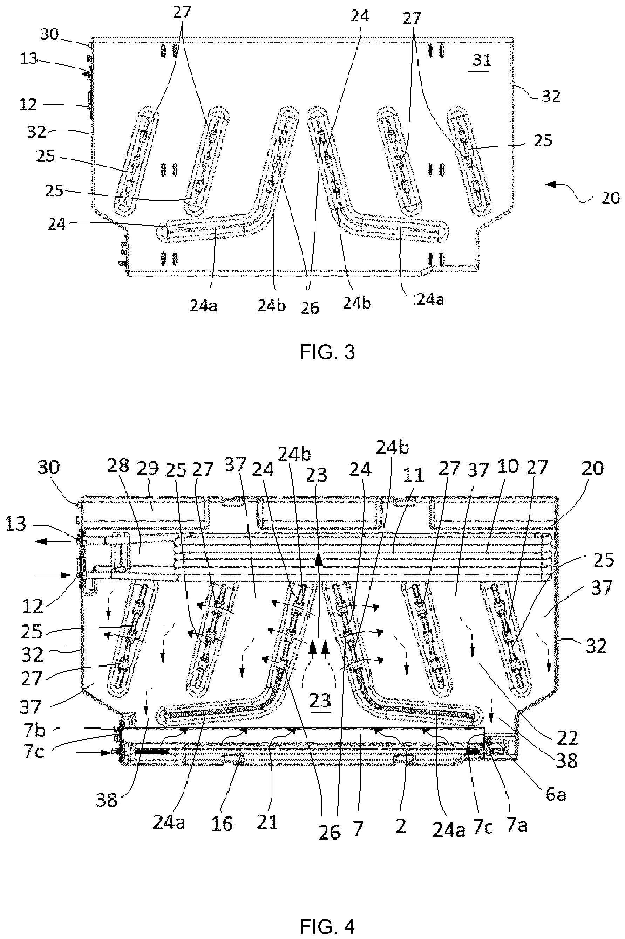

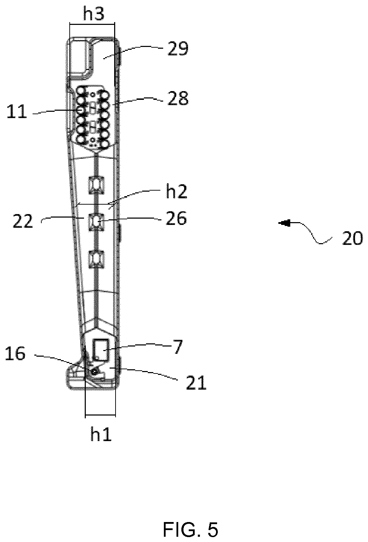

The main tank 20 comprises a technical fluid heating area 21, shown in Figures 4 and 5, in which the primary circuit 2 is partially housed, and a domestic water heating area 28 in which the secondary circuit 10 is partially housed. The volume of technical fluid comprised in the technical fluid heating area 21 is smaller than the volume of technical fluid housed in the domestic water heating area 28. The tank 20 further comprises a transmission area 22 in which the technical fluid coming from the technical fluid heating area 21 gradually heats the technical fluid housed in the transmission area 22. The transmission area 22 is arranged between the technical fluid heating area 21 and the domestic water heating area 28. The transmission area 22 comprises walls 24 demarcating a central channel 23 as a chimney, and openings 26 going through said walls 24 allowing the stratification of the technical fluid existing in the main tank 20 depending on the temperature, as shown in Figure 4. The walls 24 are substantially planar. The central channel 23 is demarcated by two walls 24 arranged partially facing one another, each of them including a first part 24a and a second part 24b, both parts being continuous to one another and forming an obtuse angle. The first parts 24a in turn demarcate the technical fluid heating area 21 whereas the second parts 24b are arranged facing one another.

The main tank 20 further comprises additional walls 25 demarcating recirculation channels 37 through which the technical fluid returns to the technical fluid heating area of the main tank 20 for heating. The additional walls 25 also include openings 27 going through said additional walls 25, allowing the temperature stratification of the technical fluid. The additional walls 25 are arranged substantially parallel to the walls 24 demarcating the central channel 23, in particular parallel to the second part 24b of said walls 24. Figure 4 depicts with arrows by way of illustration, part of the path of the technical fluid along the channels 23 and 37 and the corresponding openings 25 and 27 thereof.

Moreover, the second exchanger 16 of the primary circuit 2 is housed in the technical fluid heating area 21 of the main tank 20 whereas the secondary exchanger 11 is housed in the domestic water heating area 28 of the main tank 20. The technical fluid heating area 21 of the main tank 20 has a volume smaller than the volume of the transmission area 22 and of the domestic water heating area 28, respectively. As can be seen in Figure 5, the height h1 of the technical fluid heating area 21 is smaller than the height h2 of the transmission area 22 or the height h3 of the domestic water heating area 28, the purpose being so that a small amount of technical fluid is first heated such that it moves rapidly up to the domestic water heating area 28 and heats the domestic water circulating through the secondary exchanger 11. The technical fluid housed in the technical fluid heating area 21 is therefore rapidly heated by the second exchanger 16, the rapidly heated technical fluid moving up through the central channel 23 as it gradually mixes with the technical fluid existing in the central channel 23. The technical fluid is stratified according to its temperature such that, as a result of the chimney effect of the central channel 23, the technical fluid having a higher temperature moves up to the domestic water heating area 28 heating the domestic water circulating through the secondary exchanger 11 and goes back to the technical fluid heating area 21 through the adjacent recirculation channels 37 once it has given off heat. Simultaneously, the rest of the technical fluid existing in the central channel 23 exits through the openings 26 to the adjacent recirculation channels 37, the technical fluid being directed to the technical fluid heating area 21 through communication channels 38 communicating the transmission area 22 with the technical fluid heating area 21 of the main tank 20. Each communication channel 38 is demarcated by the respective side surface 32 of the main tank 20 and by an end of the wall 24 demarcating the central channel 23.

Moreover, the main tank 20 is configured for working without pressure. To that end, the main tank 20 comprises an air chamber 29 in the domestic water heating area 28 and at least one ventilation valve 30 (also known as pressure relief valve) which allows the main tank 20 not to be subjected to pressure. In this manner, when the technical fluid housed in the main tank 20 is heated expanding the volume thereof, the ventilation valve 30 allows extracting air housed in the air chamber 29, whereas when the technical fluid is cooled, said valve 30 allows introducing air back into the air chamber 29. Furthermore, the main tank 20 can therefore be made of a non-metallic material. In the embodiment shown in the drawings, the main tank 20 is made of a plastic material. In this manner, in addition to reducing weight, corrosion problems in said main tank 20 are avoided. As mentioned above, the main tank 20 can have a non-cylindrical geometry as it is not subjected to pressure.

The primary circuit 2 of the solar thermal system 1 further comprises an auxiliary tank 7 configured for housing the fluid circulating through the primary circuit 2, circulating fluid being understood to be the fluid in liquid phase, and for separating the fluid from the air existing in the primary circuit 2. The auxiliary tank 7 is arranged in a substantially horizontal manner.

The auxiliary tank 7 is configured for heating domestic water. In the embodiment shown in the drawings, said auxiliary tank 7 is housed in the main tank 20 immersed in the technical fluid such that both the second exchanger 16 and the auxiliary tank 7 heat the technical fluid housed in the technical fluid heating area 21. In particular, said auxiliary tank 7 is arranged in the technical fluid heating area 21 of the main tank 20.

In the embodiment shown in the drawings, the auxiliary tank 7 is arranged above the second exchanger 16. The auxiliary tank 7 is a closed tank including a fluid inlet port 7a and a fluid outlet port 7b arranged respectively in facing side walls 7c of the auxiliary tank 7. The auxiliary tank 7 is substantially prismatic. Said auxiliary tank 7 is connected to the second exchanger 16 through an inlet conduit 6a connected to the fluid inlet port 7a and connected to the first exchanger 3 of the primary circuit 2 through the outlet port 7b.

The impelling means 5 of the primary circuit 2 are configured for impelling or interrupting the fluid communication between the collector 4 and the auxiliary tank 7, such that while said impelling means are in operation, the fluid of the primary circuit 2 goes through the auxiliary tank 7 following a horizontal trajectory. Moreover, the auxiliary tank 7 is configured for housing all the fluid circulating through the primary circuit 2 when the fluid communication between the collector 4 and the auxiliary tank 7 is interrupted, i.e., when the activity of the impelling means 5 ceases. When the impelling means 5 are stopped, the circulating fluid of the primary circuit 2 falls by gravity, at least partially accumulating in the auxiliary device 7. In that situation, the circulating fluid of the auxiliary tank 7 continues to heat the technical fluid and therefore the domestic water. In the embodiment shown in the drawings, the auxiliary tank 7 and the second exchanger 16 can be extracted from the main tank 20. To that end, the main tank 20 includes a second opening 36 on a side surface 32 through which the auxiliary tank 7 together with the second exchanger 16 is introduced in or extracted from the main tank 20. The auxiliary tank 7 and the second exchanger 16 are fixed to said side surface 32 through another support 39. The assembly and replacement of said auxiliary tank 7 and/or of said second exchanger 16 without having to change the entire main tank 20 is thereby facilitated.

The solar thermal system 1 according to the invention is an integrated system, i.e., the collector 4, the primary circuit 2, the main tank 20, and the auxiliary tank 7, as well as the secondary exchanger 11 of the secondary circuit, are integrated in one and the same structure forming a compact integrated structure. To that end, in this embodiment the solar thermal system 1 includes an enclosure 45 in which there are housed the collector 4, the first and second exchangers of the primary circuit 2, the main tank 20, the auxiliary tank 7, the secondary exchanger 11 of the secondary circuit, and an insulation layer 44 arranged between the tank 20 and the first exchanger 3 of the primary circuit 2. A cover 43 is arranged on the collector 4 closing the enclosure 45. The enclosure 45 includes openings 46 and 47 to allow laterally extracting the secondary exchanger 11 and/or the second exchanger 16 from the primary circuit 2 and the auxiliary tank 7, said openings 46 and 47 being closed through a lid 48.

The solar thermal system 1 is an autonomous system which, from the fluid connection viewpoint, only requires being connected to the rest of the secondary circuit 10 through the domestic water inlet conduit 12 and the domestic water outlet conduit 13 arranged in the solar thermal system 1.

The solar thermal system 1 further comprises a photovoltaic panel 42 arranged on the collector 4 and supported in the enclosure 45, and sensors 40 configured for carrying out the readings of data such as the temperature of the fluid circulating through the primary circuit 2, of the domestic water circulating through the secondary circuit 10, domestic hot water flow rate, etc. Said sensors 40 are powered through a photovoltaic cell arranged in the photovoltaic panel 42. The solar thermal system 1 can be remotely controlled as a result of this data, such that the impelling means 5 can be activated/deactivated depending on the temperature of the different fluids, protecting the system against excessive temperatures or freezing, for example.

## Claims

1. Solar thermal system comprising a collector (4), a primary circuit (2) through which a fluid which is heated by the collector (4) circulates, a secondary domestic water circuit (10), and a tank (20) in which the fluid of the primary circuit (2) heats the domestic water of the secondary circuit (10), the tank (20) comprising a technical fluid heating area (21) in which the primary circuit (2) is partially housed, and a transmission area (22) comprising walls (24) demarcating a central channel (23) as a chimney, and openings (26) going through said walls (24), allowing the temperature stratification of a technical fluid housed in the tank (20) depending on the temperature, the technical fluid being heated by the primary circuit (2) and in turn heating the domestic water of the secondary circuit (10), the transmission area (22) being communicated with a domestic water heating area (28) in which the secondary circuit (10) is partially housed, **characterized in that** the walls (24) are substantially planar, the central channel (23) being demarcated by two walls (24) each of which including a first part (24a) demarcating the technical fluid heating area (21) of the tank (20) in which the primary circuit (2) is partially housed, and a second part (24b) continuous to said first part (24a), the second parts (24b) being arranged facing one another, the tank (20) being substantially planar and extending below the surface of the collector (4).

2. Solar thermal system according to claim 1, wherein the tank (20) comprises in the transmission area (22) additional walls (25) demarcating recirculation channels (37) through which the technical fluid returns to the technical fluid heating area (21) of the tank (20).

3. Solar thermal system according to claim 2, wherein the additional walls (25) include openings (27) going through said additional walls (25), allowing the temperature stratification of the technical fluid.

4. Solar thermal system according to claims 2 and 3, wherein the tank (20) comprises communication channels (38) communicating the recirculation channels (37) with the technical fluid heating area (21) of the main tank (20), each communication channel (38) being demarcated by a side surface (32) of the tank (20) and by an end of the wall (24) demarcating the central channel (23).

5. Solar thermal system according to any of claims 2 to 4, wherein the additional walls (25) are arranged substantially parallel to the walls (24) demarcating the central channel (23).

6. Solar thermal system according to any of the preceding claims, wherein the tank (20) comprises an air chamber (29) in the domestic water heating area (28) and at least one ventilation valve (30) which allows the tank (31) to work without pressure.

7. Solar thermal system according to any of the preceding claims, wherein the tank (20), the collector (4), the primary circuit (2), and part of the secondary circuit (10) are housed inside an enclosure (45) forming an integrated structure.

8. Solar thermal system according to any of the preceding claims, wherein the tank (20) is made of plastic.

## Patentansprüche

1. Solarwärmesystem umfassend einen Sammler (4), einen Primärkreis (2), durch welchen ein Fluid, welches vom Sammler (4) erwärmt wird, fließt, einen Sekundärkreis (10) für Haushaltswasser und einen Tank (20), in welchem das Fluid des Primärkreises (2) das Haushaltswasser des Sekundärkreises (10) erwärmt, wobei der Tank (20) einen Heizbereich (21) für technisches Fluid, in welchem der Primärkreis (2) teilweise aufgenommen ist, und einen Übertragungsbereich (22), welcher Wände (24), welche einen zentralen Kanal (23) als Kamin abgrenzen, und Öffnungen (26), welche durch die genannten Wände (24) durchgehen, umfasst, sodass die Temperaturschichtung eines technischen Fluids, welches im Tank (20) aufgenommen ist, in Abhängigkeit von der Temperatur erlaubt wird, umfasst, wobei das technische Fluid vom Primärkreis (2) erwärmt wird und wiederum das Haushaltswasser des Sekundärkreises (10) erwärmt, wobei der Übertragungsbereich (22) mit einem Heizbereich (28) für Haushaltswasser kommuniziert, in welchem der Sekundärkreis (10) teilweise aufgenommen ist, **dadurch gekennzeichnet, dass** die Wände (24) im Wesentlichen eben sind, wobei der zentrale Kanal (23) von zwei Wänden (24) abgegrenzt ist, wobei jede derselben einen ersten Teil (24a), welcher den Heizbereich (21) für technisches Fluid des Tanks (20) abgrenzt, in welchem der Primärkreis (2) teilweise aufgenommen ist, und einen zweiten Teil (24b), welcher den genannten ersten Teil (24a) fortsetzt, beinhaltet, wobei die zweiten Teile (24b) zueinander zugewandt angeordnet sind, wobei der Tank (20) im Wesentlichen eben ist und sich unter der Oberfläche des Sammlers (4) erstreckt.

2. Solarwärmesystem nach Anspruch 1, wobei der Tank (20) im Übertragungsbereich (22) zusätzliche Wände (25) umfasst, welche Rückführkanäle (37) abgrenzen, durch welche das technische Fluid zum Heizbereich (21) für technisches Fluid des Tanks (20) zurückkehrt.

3. Solarwärmesystem nach Anspruch 2, wobei die zusätzlichen Wände (25) Öffnungen (27) beinhalten, welche durch die genannten zusätzlichen Wände (25) durchgehen, sodass die Temperaturschichtung des technischen Fluids erlaubt wird.

4. Solarwärmesystem nach den Ansprüchen 2 und 3, wobei der Tank (20) Kommunikationskanäle (38) umfasst, welche die Rückführkanäle (37) mit dem Heizbereich (21) für technisches Fluid des Haupttanks (20) kommunizieren, wobei jeder Kommunikationskanal (38) von einer seitlichen Oberfläche (32) des Tanks (20) und von einem Ende der Wand (24), welche den zentralen Kanal (23) abgrenzt, abgegrenzt ist.

5. Solarwärmesystem nach einem der Ansprüche 2 bis 4, wobei die zusätzlichen Wände (25) im Wesentlichen parallel zu den Wänden (24), welche den zentralen Kanal (23) abgrenzen, angeordnet sind.

6. Solarwärmesystem nach einem der vorhergehenden Ansprüche, wobei der Tank (20) eine Luftkammer (29) im Heizbereich (28) für Haushaltswasser und mindestens ein Lüftungsventil (30), welches dem Tank (31) erlaubt, ohne Druck zu arbeiten, umfasst.

7. Solarwärmesystem nach einem der vorhergehenden Ansprüche, wobei der Tank (20), der Sammler (4), der Primärkreis (2) und ein Teil des Sekundärkreises (10) innerhalb einer Einfassung (45) unter Bildung einer integrierten Struktur aufgenommen sind.

8. Solarwärmesystem nach einem der vorhergehenden Ansprüche, wobei der Tank (20) aus Kunststoff hergestellt ist.

## Revendications

1. Système thermique solaire comprenant un capteur (4), un circuit primaire (2) à travers lequel circule un fluide qui est chauffé par le capteur (4), un circuit secondaire d'eau domestique (10), et un réservoir (20) dans lequel le fluide du circuit primaire (2) chauffe l'eau domestique du circuit secondaire (10), le réservoir (20) comprenant une zone de chauffage du fluide technique (21) dans laquelle est partiellement logé le circuit primaire (2), et une zone de transmission (22) comprenant des parois (24) délimitant un canal central (23) comme une cheminée, et des ouvertures (26) traversant lesdites parois (24), permettant la stratification de température d'un fluide technique logé dans le réservoir (20) en fonction de la température, le fluide technique étant chauffé par le circuit primaire (2) et à son tour chauffant l'eau domestique du circuit secondaire (10), la zone de transmission (22) étant communiquée avec une zone de chauffage d'eau domestique (28) dans laquelle est partiellement logé le circuit secondaire (10), **caractérisé en ce que** les parois (24) sont substantiellement plates, le canal central (23) étant délimité par deux parois (24) chacune desquelles comprenant une première partie (24a) délimitant la zone de chauffage du fluide technique (21) du réservoir (20) dans laquelle est partiellement logé le circuit primaire (2), et une seconde partie (24b) continue à ladite première partie (24a), les secondes parties (24b) étant disposées l'une en face de l'autre, le réservoir (20) étant substantiellement plat et s'étendant en-dessous de la surface du capteur (4).

2. Système thermique solaire selon la revendication 1, dans lequel le réservoir (20) comprend dans la zone de transmission (22) des parois additionnelles (25) délimitant des canaux de recirculation (37) à travers lesquels le fluide technique retourne à la zone de chauffage du fluide technique (21) du réservoir (20).

3. Système thermique solaire selon la revendication 2, dans lequel les parois additionnelles (25) comprennent des ouvertures (27) traversant lesdites parois additionnelles (25), permettant la stratification de température du fluide technique.

4. Système thermique solaire selon les revendications 2 et 3, dans lequel le réservoir (20) comprend des canaux de communication (38) communiquant les canaux de recirculation (37) avec la zone de chauffage du fluide technique (21) du réservoir principal (20), chaque canal de communication (38) étant délimité par une surface latérale (32) du réservoir (20) et par une extrémité de la paroi (24) délimitant le canal central (23).

5. Système thermique solaire selon l'une quelconque des revendications 2 à 4, dans lequel les parois additionnelles (25) sont disposées substantiellement parallèles aux parois (24) délimitant le canal central (23).

6. Système thermique solaire selon l'une quelconque des revendications précédentes, dans lequel le réservoir (20) comprend une chambre à air (29) dans la zone de chauffage d'eau domestique (28) et au moins une soupape de ventilation (30) qui permet au réservoir (31) de travailler sans pression.

7. Système thermique solaire selon l'une quelconque des revendications précédentes, dans lequel le réservoir (20), le capteur (4), le circuit primaire (2), et partie du circuit secondaire (10) sont logés à l'intérieur d'une enceinte (45) formant une structure intégrée.

8. Système thermique solaire selon l'une quelconque des revendications précédentes, dans lequel le réservoir (20) est fait en plastique.
